# EUROPÄISCHE PATENTANMELDUNG

(11) **EP 4 697 538 A1**
(43) Veröffentlichungstag der Anmeldung: **18.02.2026**
(21) Anmeldenummer: 25195118.2
(22) Anmeldetag: 11.08.2025
(51) Int. Cl.: H02J 3/14

(54) **VERFAHREN ZUM BETRIEB EINES ENERGIEVERSORGUNGSSYSTEMS UND ENERGIEVERSORGUNGSSYSTEM**

(30) Priorität: 16.08.2024 DE 102024123428
(71) Anmelder: Westnetz GmbH, 44139 Dortmund (DE); Avacon Netz GmbH, 38350 Helmstedt (DE); Envelio GmbH, 50933 Köln (DE)
(72) Erfinder: Hansen, Matthias, 44137 Dortmund (DE); Geueke, André, 52355 Düren (DE); Jätz, Christoph, 30165 Hannover (DE); Benecke, Sandrino, 39646 Oebisfelde-Weferlingen (DE); Fabis, Robin, 50677 Köln (DE)
(74) Vertreter: Bals & Vogel Patentanwälte PartGmbB

(57) **Zusammenfassung**

Die Erfindung betrifft ein Verfahren (100) zum Betrieb eines Energieversorgungssystems (50), umfassend ein Stromnetz (51) sowie eine zentrale Steuereinheit (52), das Stromnetz (51) umfassend wenigstens eine Einspeisestelle (53), wenigstens eine Verbrauchsstelle (54), wenigstens ein Erfassungsmittel (55) sowie wenigstens eine Schaltanlage (56), wobei durch das Erfassungsmittel (55) ein Lastzustand an wenigstens einer Einspeisestelle (53) und/oder Verbrauchsstelle (54) erfassbar ist und wobei durch die Schaltanlage (56) eine Energieversorgung wenigstens eines Teilnetzes (57) des Stromnetzes (51) zu- und abschaltbar ist, das Verfahren (100) umfassend:
- Erfassen (110) einer Freischaltanfrage durch die zentrale Steuereinheit (52), wobei die Freischaltanfrage charakteristisch ist für eine geplante Abschaltung der Energieversorgung in wenigstens einem Teilnetz (57) des Stromnetzes (51),
- Bereitstellen (120) wenigstens einer Lastzustandsinformation durch wenigstens ein Erfassungsmittel (55), wobei die Lastzustandsinformation charakteristisch ist für einen Lastzustand an wenigstens einer Einspeisestelle (53) und/oder Verbrauchsstelle (54),
- Übermitteln (130) wenigstens einer Lastzustandsinformation an die zentrale Steuereinheit (52),
- Ermitteln (140) einer Belastungsverteilung innerhalb des Stromnetzes (51) durch die zentrale Steuereinheit (52) in Abhängigkeit wenigstens einer Lastzustandsinformation und
- Ermitteln (150) einer Schaltempfehlungsinformation durch die zentrale Steuereinheit (52) in Abhängigkeit der Freischaltanfrage und der Belastungsverteilung, umfassend wenigstens eine Schaltempfehlung zur Durchführung wenigstens eines Schaltvorgangs in einer Schaltanlage (56).

## Beschreibung

Die Erfindung betrifft ein Verfahren mit den Merkmalen des unabhängigen Patentanspruchs 1, ein Energieversorgungssystem mit den Merkmalen des unabhängigen Patentanspruchs 9, ein Computerprogrammprodukt mit den Merkmalen des unabhängigen Patentanspruchs 11, ein computerlesbares Medium mit den Merkmalen des unabhängigen Patentanspruchs 12 sowie ein Datenträgersignal mit den Merkmalen des unabhängigen Patentanspruchs 13.

Stromnetze im Nieder-, Mittel- und Hochspannungsbereich weisen eine komplexe Infrastruktur auf, die fortwährend in Stand gehalten werden muss, um eine sichere und zuverlässige Energieversorgung von Endverbrauchern gewährleisten zu können. Hierzu ist es in Bezug auf ein Stromnetz regelmäßig erforderlich die Energieversorgung in Teilnetzen dieses Stromnetzes zu unterbrechen, um Instandhaltungsarbeiten gefahrlos durchführen zu können. Zur sog. Freischaltung eines solchen Teilnetzes werden in dem Stromnetz vorgesehene Schaltanlagen verwendet, durch welche die Energieversorgung wenigstens eines Teilnetzes zugeschaltet bzw. abgeschaltet werden kann. Bei der Freischaltung eines Teilnetzes ist es von Interesse die Energieversorgung innerhalb des Stromnetzes möglichst flächendeckend aufrechtzuerhalten, den von der Energieversorgung freigeschalteten Bereich also so klein wie möglich zu halten. Um dieses Ziel zu erreichen, können teils mehrere Schaltvorgänge in unterschiedlichen Schaltanlagen des Stromnetzes erforderlich sein. Das für eine Freischaltung eines Teilnetzes optimale Vorgehen in Bezug auf eine maximale Energieverfügbarkeit, aber auch in Hinsicht auf eine etwaige Überlastung verbleibender Teilnetze ist aufgrund der Komplexität der gegebenen Infrastruktur schwierig zu ermitteln. Insbesondere hängt es von einer Vielzahl von zeitaktuellen Einzelfaktoren ab, welche sich gegenseitig beeinflussen können und durch den Menschen ganzheitlich kaum zu erfassen sind.

Es ist daher eine Aufgabe der vorliegenden Erfindung, wenigstens einen der voranstehend beschriebenen Nachteile zumindest teilweise zu überwinden. Insbesondere ist es Aufgabe der Erfindung ein Verfahren zum Betrieb eines Energieversorgungssystems, ein Energieversorgungssystem, ein Computerprogrammprodukt, ein computerlesbares Medium sowie ein Datenträgersignal bereitzustellen, die eine einfache und zuverlässige Ermittlung von Schaltvorgängen zur Freischaltung von Teilnetzen eines Stromnetzes bei einem gleichzeitig sicheren Betrieb und einer möglichst hohen Verfügbarkeit der verbleibenden Teilnetze ermöglichen.

Die voranstehende Aufgabe wird gelöst durch ein Verfahren mit den Merkmalen des unabhängigen Patentanspruchs 1, durch ein Energieversorgungssystem mit den Merkmalen des unabhängigen Patentanspruchs 9, durch ein Computerprogrammprodukt mit den Merkmalen des unabhängigen Patentanspruchs 11, durch ein computerlesbares Medium mit den Merkmalen des unabhängigen Patentanspruchs 12 sowie durch ein Datenträgersignal mit den Merkmalen des unabhängigen Patentanspruchs 13. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Energieversorgungssystem und/oder im Zusammenhang mit dem erfindungsgemäßen Computerprogrammprodukt und/oder im Zusammenhang mit dem erfindungsgemäßen computerlesbares Medium und/oder im Zusammenhang mit dem erfindungsgemäßen Datenträgersignal und jeweils umgekehrt, sodass bezüglich der Offenbarung zu den einzelnen Erfindungsaspekten stets wechselseitig Bezug genommen wird bzw. werden kann.

Erfindungsgemäß vorgesehen ist ein Verfahren zum Betrieb eines Energieversorgungssystems, umfassend ein Stromnetz, eine zentrale Steuereinheit, wenigstens eine Einspeisestelle, wenigstens eine Verbrauchsstelle, wenigstens ein Erfassungsmittel sowie wenigstens eine Schaltanlage, wobei durch das Erfassungsmittel ein Lastzustand an wenigstens einer Einspeisestelle und/oder Verbrauchsstelle erfassbar ist und wobei durch die Schaltanlage eine Energieversorgung wenigstens eines Teilnetzes des Stromnetzes zu- und abschaltbar ist, das Verfahren umfassend:
- Erfassen einer Freischaltanfrage durch die zentrale Steuereinheit, wobei die Freischaltanfrage charakteristisch ist für eine geplante Abschaltung der Energieversorgung in wenigstens einem Teilnetz des Stromnetzes,
- Bereitstellen wenigstens einer Lastzustandsinformation durch wenigstens ein Erfassungsmittel, wobei die Lastzustandsinformation charakteristisch ist für einen Lastzustand an wenigstens einer Einspeisestelle und/oder Verbrauchsstelle,
- Übermitteln wenigstens einer Lastzustandsinformation an die zentrale Steuereinheit,
- Ermitteln einer Belastungsverteilung innerhalb des Stromnetzes durch die zentrale Steuereinheit in Abhängigkeit wenigstens einer Lastzustandsinformation und
- Ermitteln einer Schaltempfehlungsinformation durch die zentrale Steuereinheit in Abhängigkeit der Freischaltanfrage und der Belastungsverteilung, umfassend wenigstens eine Schaltempfehlung, wobei die Schaltempfehlung charakteristisch ist für wenigstens einen Schaltvorgang in einer Schaltanlage und optional
- Anpassen des Betriebs des Energieversorgungssystems in Abhängigkeit der Schaltempfehlungsinformation, insbesondere einer Schaltempfehlung der Schaltempfehlungsinformation.

In anderen Worten wird ein Verfahren zum Betrieb eines Energieversorgungssystems vorgeschlagen, wobei das Energieversorgungssystem ein Stromnetz, eine zentrale Steuereinheit, eine Einspeisestelle, eine Verbrauchsstelle, wenigstens ein Erfassungsmittel sowie wenigstens eine Schaltanlage umfasst. Das Erfassungsmittel ist dazu ausgebildet einen Lastzustand an wenigstens einer Einspeisestelle und/oder Verbrauchsstelle zu erfassen.

Ein Lastzustand soll vorliegend insbesondere verstanden werden als eine an der Einspeisestelle in das Stromnetz eingebrachte elektrische Leistung bzw. eine an der Verbrauchsstelle abgenommene elektrische Leistung. Auch kann der Lastzustand kennzeichnen, ob eine Energieversorgung an der Einspeisestelle bzw. Verbrauchsstelle vorliegt oder nicht. Insbesondere kann das Stromnetz eine Vielzahl von Erfassungsmitteln umfassen, um den Lastzustand an möglichst vielen Einspeise- bzw. Verbrauchsstellen erfassen bzw. bereitstellen zu können. Ein Erfassungsmittel kann bspw. als ein Smart-Meter ausgebildet sein. Auch kann durch wenigstens ein Erfassungsmittel eine Schalterstellung wenigstens eines Schalters in einer Schaltanlage erfassbar und als Lastzustandsinformation bereitstellbar sein.

Ferner ist die Schaltanlage dazu ausgebildet eine Energieversorgung wenigstens eines Teilnetzes des Stromnetzes zu- bzw. abschalten zu können. Unter einer Zuschaltung soll eine Versorgung des Teilnetzes mit Energie verstanden werden und unter einer Abschaltung eine Trennung des Teilnetzes von der Energieversorgung (Freischaltung). Ein Teilnetz soll vorliegend verstanden werden als ein Teilbereich des Stromnetzes. Die Zu- und Abschaltung bezieht sich auf die Energieversorgung des Teilnetzes über die jeweils konkrete Schaltanlage. Es ist nicht ausgeschlossen, dass ein Teilnetz über mehrere Einspeisestellen mit Energie versorgt wird, sodass für eine Freischaltung ggf. Schaltvorgänge in mehreren Schaltanlagen erforderlich wären.

Es kann vorgesehen sein, dass ein Teilnetz innerhalb des Stromnetzes über ein in Bezug auf den Energiefluss vorgelagertes Teilnetz mit Energie versorgt wird. Soll das vorgelagerte Teilnetz nun freigeschaltet werden, würde auch das nachgelagerte von der Energieversorgung getrennt werden. Allerdings sind zumindest einzelne Teilnetze mit mehreren Teilnetzen des Stromnetzes verbunden, sodass in diesem Fall eine Energieversorgung des nachgelagerten Teilnetzes über ein weiteres Teilnetz hergestellt werden kann. Durch ein solches Vorgehen kann eine Energieversorgung um Stromnetz auch bei der Freischaltung einzelner Teilnetze möglichst flächendeckend aufrechterhalten werden. Für die Umsetzung sind entsprechende Schaltvorgänge in Schaltanlagen des Stromnetzes erforderlich.

Erfindungsgemäß ist vorgesehen, dass durch die zentrale Steuereinheit eine Freischaltanfrage erfasst wird, wobei die Freischaltanfrage charakteristisch ist für eine geplante Abschaltung der Energieversorgung in wenigstens einem Teilnetz des Stromnetzes. In anderen Worten beinhaltet die Freischaltanfrage die Information, in welchem Teilnetz oder welchen Teilnetzen des Stromnetzes eine Unterbrechung der Energieversorgung erfolgen soll. Die Freischaltanfrage kann zusätzlich eine Zeitinformation umfassen, die charakteristisch dafür ist, zu welchem Zeitpunkt und/oder über welche Dauer die Abschaltung der Energieversorgung in wenigstens einem Teilnetz erfolgen soll.

Die Freischaltanfrage kann vorzugsweise durch einen Benutzer bereitgestellt werden. Insbesondere kann die Freischaltanfrage von einem Benutzer an wenigstens einem Benutzergerät eingegeben und vorzugsweise von dem Benutzergerät an die zentrale Steuereinheit übermittelt und dort erfasst werden. Auch kann die Freischaltanfrage durch die zentrale Steuereinheit selbst bereitgestellt werden. Hierzu kann bspw. ein Freischaltplan in der zentralen Steuereinheit, insbesondere auf einem Datenspeicher der zentralen Steuereinheit, hinterlegt sein, der wenigstens eine Freischaltanfrage umfasst in Verbindung mit einer Zeitinformation, die charakteristisch ist für den Zeitpunkt, an dem die Freischaltanfrage bereitzustellen ist.

Ferner ist vorgesehen, dass durch wenigstens ein Erfassungsmittel eine Lastzustandsinformation erfasst bzw. bereitgestellt wird, wobei die Lastzustandsinformation charakteristisch ist einen Lastzustand an einer Einspeisestelle und/oder Verbrauchsstelle. Ferner ist vorgesehen, dass wenigstens eine Lastzustandsinformation an die zentrale Steuereinheit übermittelt wird. Insbesondere können durch alle Erfassungsmittel entsprechende Lastzustandsinformationen erfasst bzw. bereitgestellt und an die zentrale Steuereinheit übermittelt werden.

Das Übermitteln der Lastzustandsinformation zwischen wenigstens einer Erfassungseinheit und der zentralen Steuereinheit kann gemäß einem Push-Verfahren und/oder Pull-Verfahren erfolgen. In anderen Worten kann wenigstens eine Erfassungseinheit aktiv die Lastzustandsinformation an die zentrale Steuereinheit übermitteln. Dies kann insbesondere erfolgen, wenn durch die Erfassungseinheit eine Änderung eines Lastzustands detektiert wurde. Zusätzlich oder alternativ kann bei wenigstens einer Erfassungseinheit die Lastzustandsinformation von der zentralen Steuereinheit abgefragt werden. Die Lastzustandsinformation wird also nur übermittelt, sofern die Erfassungseinheit dazu seitens der zentralen Steuereinheit aufgefordert wurde. Insbesondere durch einen kombinierten Einsatz beider Vorgehensweisen kann sichergestellt werden, dass der zentralen Steuereinheit alle relevanten Lastzustandsinformationen vorliegen, aber keine Übermittlung nicht benötigter, insbesondere redundanter, Daten erfolgt.

Ferner ist vorgesehen, dass durch die zentrale Steuereinheit in Abhängigkeit wenigstens einer Lastzustandsinformation eine, insbesondere modellbasierte, Belastungsverteilung innerhalb des Stromnetzes ermittelt wird. Die Ermittlung der Belastungsverteilung kann bevorzugt auf Grundlage eines Stromnetzmodells des Stromnetzes erfolgen. Das Stromnetzmodell soll vorliegend verstanden werden als ein digitaler Zwilling des Stromnetzes, also ein digitales Abbild des Stromnetzes, mit welchem die Wechselwirkungen der unterschiedlichen Bestandteile des Stromnetzes, wie insbesondere Einspeisestellen, Verbrauchsstellen und Schaltanlagen, modellierbar sind. So kann unter Verwendung der durch die Erfassungsmittel bereitgestellten Lastzustandsinformationen an unterschiedlichen Stromnetzpositionen mit Hilfe des Stromnetzmodells ein Abbild der momentanen Belastungsverteilung innerhalb des Stromnetzes generiert werden.

Auf Grundlage der durch die zentrale Steuereinheit ermittelten, insbesondere modellbasierten, Belastungsverteilung und der Freischaltanfrage wird ferner eine Schaltempfehlungsinformation ermittelt bzw. bereitgestellt, wobei die Schaltempfehlungsinformation wenigstens eine Schaltempfehlung zur Durchführung wenigstens eines Schaltvorgangs in einer Schaltanlage umfasst. In anderen Worten umfasst die Schaltempfehlungsinformation eine oder mehrere Schaltempfehlungen. Dabei ist insbesondere jede Schaltempfehlung dazu geeignet, bei einer Umsetzung das gemäß der Freischaltanfrage geforderte Ergebnis zu erreichen. Dabei kann jede Schaltempfehlung wenigstens einen oder mehrere Schaltvorgänge in wenigstens einer Schaltanlage umfassen. Ein Schaltvorgang in einer Schaltanlage soll vorliegend als ein Schaltvorgang verstanden werden, mit dem eine Energieversorgung wenigstens eines Teilnetzes des Stromnetzes zu- bzw. abgeschaltet wird.

Insbesondere kann der Betrieb des Energieversorgungssystems in Abhängigkeit der ermittelten Schaltempfehlungsinformation bzw. einer durch die Schaltempfehlungsinformation umfassten Schaltempfehlung, angepasst werden. Das Anpassen des Betriebs kann insbesondere ein Umsetzen einer, insbesondere durch die Schaltempfehlungsinformation umfassten, Schaltempfehlung umfassen bzw. darin bestehen.

Ein erfindungsgemäßes Verfahren bietet den Vorteil, dass der zentralen Steuereinheit stets aktuelle oder im Wesentlichen aktuelle Informationen zum Lastzustand einzelner Knotenpunkte in dem Stromnetz vorliegen und auf dieser Grundlage eine verbesserte Planung von Schaltvorgängen durchführbar ist. Insbesondere kann auf diese Weise eine Überlastung von Teilnetzbereichen aufgrund etwaiger Schaltvorgänge vermieden und eine möglichst hohe Verfügbarkeit verbleibender Teilnetzbereiche bei einer gleichzeitigen Freischaltung einzelner Teilnetzbereiche realisiert werden.

Es ist in Bezug auf die vorliegende Erfindung denkbar, dass zumindest einzelne Schritte des Verfahrens wiederkehrend und/oder, zumindest teilweise, simultan durchgeführt werden. Zusätzlich oder alternativ kann vorgesehen sein, dass die Schritte in der angegebenen Reihenfolge durchgeführt werden. Zusätzlich oder alternativ kann ferner vorgesehen sein, dass das Verfahren als ein computerimplementiertes Verfahren ausgebildet ist.

Im Rahmen der Erfindung kann es von Vorteil sein, dass ferner wenigstens eines der folgenden umfasst ist:
- Bereitstellen der Schaltempfehlungsinformation für einen Benutzer, insbesondere durch die zentrale Steuereinheit, und/oder
- Auswählen einer Schaltempfehlung aus der Schaltempfehlungsinformation, insbesondere durch einen Benutzer oder die zentrale Steuereinheit und/oder
- Umsetzen einer bzw. der, insbesondere aus der Schaltempfehlungsinformation ausgewählten und/oder freigegebenen, Schaltempfehlung.

Das Bereitstellen der Schaltempfehlungsinformation kann insbesondere über eine Benutzerschnittstelle erfolgen. Insbesondere kann die Schaltempfehlungsinformation über ein Web-Interface und/oder auf wenigstens einem Benutzergerät, insbesondere einem Smartphone oder Tablet oder Laptop, bereitgestellt werden. So kann der Benutzer sich einen Überblick über die ermittelten Schaltempfehlungen zur Erreichung der in der Freischaltanfrage definierten Ziele verschaffen und die nach seiner Auffassung beste Schaltempfehlung auswählen.

Alternativ kann das Auswählen einer Schaltempfehlung aus der Schaltempfehlungsinformation durch die zentrale Steuereinheit, insbesondere auf Grundlage einer festgelegten Gewichtung, erfolgen. So kann bspw. festgelegt werden, dass stets diejenige Schaltempfehlung mit den wenigstens Schaltvorgängen ausgewählt wird. Zusätzlich oder alternativ kann vorgesehen sein, dass diejenige Schaltempfehlung ausgewählt wird, die eine vorgegebene Lastverteilungsanforderung erfüllt. Hierdurch kann bspw. vorgegeben sein, dass eine vorgegebene Belastungsgrenze im Stromnetz bzw. in keinem Teilnetz überschritten wird. Zusätzlich oder alternativ kann vorgesehen sein, dass diejenige Schaltempfehlung ausgewählt wird, zu der die kürzeste Route bzw. Wegstrecke ermittelt wurde.

Ferner kann vorgesehen sein, dass die, insbesondere ausgewählte, Schaltempfehlung umgesetzt wird. Das Umsetzen der Schaltempfehlung kann, zumindest teilweise, durch einen Benutzer erfolgen, der die durch die Schaltempfehlung vorgegebenen Schaltvorgänge, zumindest teilweise, manuell umsetzt. Zusätzlich oder alternativ kann die, insbesondere ausgewählte, Schaltempfehlung, zumindest teilweise, automatisiert, wobei die durch die Schaltempfehlung vorgegebenen Schaltvorgänge, zumindest teilweise, durch die zentrale Steuereinheit ferngesteuert werden.

Insbesondere kann das Umsetzen der Schaltempfehlung also ein ferngesteuertes bzw. automatisches Umsetzen der Schaltempfehlung sein. Bevorzugt kann in diesem Zusammenhang vorgesehen sein, dass das Verfahren wenigstens eines der folgenden umfasst:
- Erzeugen wenigstens eines Steuersignals durch die zentrale Steuereinheit, wobei das Steuersignal dazu ausgebildet ist, wenigstens einen durch die Schaltempfehlung charakterisierten Schaltvorgang in einer Schaltanlage auszulösen,
- Übermitteln wenigstens eines erzeugten Steuersignals von der zentralen Steuereinheit an wenigstens eine Schaltanlage und
- Durchführen wenigstens eines Schaltvorgangs durch wenigstens eine Schaltanlage in Reaktion auf einen Empfang eines an die Schaltanlage übermittelten Steuersignals und/oder
- Übermitteln einer Bestätigung von wenigstens einer Schaltanlage an die zentrale Steuereinheit, dass wenigstens ein Steuersignal empfangen und/oder wenigstens ein durch das Steuersignal charakterisierter Schaltvorgang durchgeführt wurde.

Es versteht sich, dass mehrere Steuersignale erzeugt, übermittelt und umgesetzt werden können. Insbesondere wenn die Schaltempfehlung mehrere Schaltvorgänge in unterschiedlichen Schaltanlagen charakterisiert, kann für jede Schaltanlage wenigstens ein Steuersignal erzeugt und an die jeweiligen Schaltanlagen übermittelt werden. Das Durchführen von Schaltvorgängen in wenigstens einer Schaltanlage erfolgt bevorzugt durch das Schalten einer oder mehrerer Schaltvorrichtungen, insbesondere Relais.

Insbesondere kann die zentrale Steuereinheit mit wenigstens einer Schaltanlage in eine kommunikative Verbindung bringbar sein bzw. in einer kommunikativen Verbindung mit wenigstens einer Schaltanlage stehen, bspw. um ein Steuersignal oder eine Bestätigung zwischen der zentralen Steuereinheit und der Schaltanlage zu übermitteln.

Im Rahmen der Erfindung ist es denkbar, dass das Ermitteln der Schaltempfehlungsinformation, insbesondere wenigstens einer Schaltempfehlung, insbesondere aller Schaltempfehlungen, Folgendes umfasst:
- Berücksichtigen wenigstens einer aus wenigstens einem Schaltvorgang in einer Schaltanlage resultierenden Laständerung in dem Stromnetz, insbesondere wenigstens einem Teilnetz, sodass eine Überlastung des Stromnetzes, insbesondere Teilnetzes, bei einem Umsetzen der Schaltempfehlung vermieden wird.

In anderen Worten kann vorgesehen sein, dass eine aus wenigstens einem Schaltvorgang resultierende Umverteilung einer elektrischen Last in dem Stromnetz bei der Ermittlung wenigstens einer Schaltempfehlung berücksichtigt wird. Die Laständerung kann vorzugsweise durch das Stromnetzmodell ermittelt werden. Eine solche Laständerung kann bspw. daraus resultieren, dass ein Teilnetz durch ein freizuschaltendes Teilnetz mit Energie versorgt wurde und in der Folge von einem anderen Teilnetz mit Energie versorgt werden muss, um eine möglichst flächendeckende Versorgung aufrechtzuerhalten. Dabei steigt die elektrische Last dieses anderen Teilnetzes in der Folge an, da zusätzliche Verbraucher mitversorgt werden müssen. So kann eine aus einem oder mehreren Schaltvorgängen resultierende, zumindest lokale, Überlastung des Stromnetzes gezielt vermieden werden.

Zusätzlich oder alternativ kann im Rahmen der Erfindung vorgesehen sein, dass das Ermitteln der Schaltempfehlungsinformation, insbesondere wenigstens einer Schaltempfehlung, insbesondere aller Schaltempfehlungen, Folgendes umfasst:
- Berücksichtigen der Position wenigstens zweier Schaltanlagen, sodass eine Wegstrecke zwischen den durch die Schaltempfehlung adressierten Schaltanlagen minimal ist,
- Ermitteln einer Route entlang der durch die Schaltempfehlung adressierten Schaltanlagen.

In anderen Worten kann vorgesehen sein, dass bei wenigstens eine Schaltempfehlung mit dem Ziel erstellt wird, dass die durch die Schaltempfehlung adressierten Schaltanlagen, also diejenigen Schaltanlagen, in denen Schaltvorgänge durchgeführt werden sollen, möglichst nah beieinander liegen. Es kann vorgesehen sein, dass die Position, insbesondere Geoposition, wenigstens einer Schaltanlage bzw. aller Schaltanlagen in dem Stromnetzmodell hinterlegt ist. Insbesondere wenn einzelne Schaltvorgänge manuell durchzuführen sind, kann hierdurch der Zeit- und Kostenaufwand für das Umsetzen der Schaltempfehlung reduziert werden. Insbesondere kann vorgesehen sein, dass eine Route bzw. Wegstrecke entlang der durch die Schaltempfehlung adressierten Schaltanlagen ermittelt bzw. generiert wird. Hierzu können insbesondere in der zentralen Steuereinheit hinterlegte Karteinformationen genutzt werden. Die ermittelte Route kann bevorzugt in die jeweilige Schaltempfehlung bzw. die Schaltempfehlungsinformation integriert werden.

Insbesondere kann das Verfahren ferner wenigstens eines der folgenden umfassen:
- Übermitteln der zu einer, insbesondere ausgewählten, Schaltempfehlung ermittelten Route an ein Fahrzeug, insbesondere durch die zentrale Steuereinheit,
- Empfangen der Route durch wenigstens ein bzw. das Fahrzeug,
- Zumindest teilweise autonomes Abfahren der Route durch wenigstens ein bzw. das Fahrzeug.

Das Fahrzeug kann durch das Energieversorgungssystem umfasst sein. Bevorzugt kann das Fahrzeug dazu ausgebildet sein die Route autonom oder zumindest teilweise autonom abzufahren bzw. es kann vorgesehen sein, dass das Fahrzeug die Route autonom oder zumindest teilweise autonom abfährt. Auf diese Weise kann ein Benutzer einfach und zuverlässig zu den jeweiligen Schaltanlagen gebracht werden, wobei die Fahrtzeit für weitere Aufgaben genutzt werden kann. Das Fahrzeug kann bevorzugt ein Auto bzw. PKW oder ein Nutzfahrzeug, insbesondere ein LKW, sein. Alternativ kann das Fahrzeug auch ein Luftfahrzeug, insbesondere ein elektrisch betriebenes Luftfahrzeug, sein.

Es ist ferner denkbar, dass das Ermitteln der Schaltempfehlungsinformation, insbesondere wenigstens einer Schaltempfehlung, insbesondere aller Schaltempfehlungen, Folgendes umfasst:
- Berücksichtigen der Fernsteuerbarkeit wenigstens einer Schaltanlage, sodass eine Umsetzung der Schaltempfehlung ferngesteuert durchführbar ist.

In anderen Worten kann vorgesehen sein, dass wenigstens eine Schaltempfehlung mit dem Ziel erstellt wird, dass alle durch die Schaltempfehlung umfassten Schaltvorgänge ferngesteuert durchführbar sind. Hierdurch ergibt sich eine besonders kosten- und zeiteffiziente Umsetzbarkeit der Schaltempfehlung. Hierzu können Informationen darüber in dem Stromnetzmodell hinterlegt sein, die charakterisieren ob und welche Teilnetze durch eine Schaltanlage ferngesteuert schaltbar sind.

Zusätzlich oder alternativ kann vorteilhafterweise vorgesehen sein, dass das Ermitteln der Schaltempfehlungsinformation, insbesondere wenigstens einer Schaltempfehlung, insbesondere aller Schaltempfehlungen, Folgendes umfasst:
- Berücksichtigen einer Lastvorhersage zur zeitlichen Entwicklung des Lastzustands an wenigstens einer Einspeisestelle und/oder Verbrauchsstelle, zur Vermeidung einer zukünftigen Überlastung des Stromnetzes bei einem Umsetzen der Schaltempfehlung.

In anderen Worten kann vorzugsweise vorgesehen sein, dass wenigstens eine Schaltempfehlung unter Berücksichtigung einer Lastvorhersage zur zeitlichen Entwicklung des Lastzustands an wenigstens einer Einspeisestelle und/oder Verbrauchsstelle ermittelt wird. So kann bspw. zum Zeitpunkt einer gewünschten Freischaltung eines Teilnetzes in einigen Teilnetzen eine geringe Last anliegen. Diese Teilnetze könnten insofern zur Aufrechterhaltung der Versorgung betroffener Teilnetze bei einer Freischaltung eines Teilnetzes in Frage kommen. Besteht jedoch Kenntnis darüber, dass in naher Zukunft die Belastung in einzelnen Teilnetzen üblicherweise ansteigt, so würden diese Teilnetze sinnvollerweise nicht für die Versorgung weiterer Teilnetze in Betracht gezogen werden, um eine Belastung des Stromnetzes in diesen Teilnetzen zu verhindern.

Die Lastvorhersage kann insbesondere durch das Stromnetzmodell bereitgestellt werden. Insbesondere kann die Bereitstellung der Lastvorhersage auf Grundlage eines neuronalen Netzes des Stromnetzmodells erfolgen. Vorzugsweise kann das neuronale Netz dabei mit den Erfassungseinheiten an die zentrale Steuereinheit übermittelten Lastzustandsinformationen, insbesondere kontinuierlich, angelernt werden. Auf diese Weise können durch das neuronale Netz Prognosen zur zeitlichen Entwicklung des Lastzustandes an einzelnen Einspeise bzw. Verbrauchsstellen erstellt werden.

Auch ist es denkbar, dass ferner wenigstens eines der folgenden umfasst ist:
- Übermitteln der Schaltempfehlungsinformation an wenigstens einen Benutzer bzw. wenigstens ein Benutzergerät, insbesondere durch die zentrale Steuereinheit,
- Freigeben wenigstens einer durch die Schaltempfehlungsinformation umfassten Schaltempfehlung durch den Benutzer und
- Bereitstellen einer Freigabeinformation in der Schaltempfehlungsinformation, insbesondere durch die zentrale Steuereinheit, wobei die Freigabeinformation für die Freigabe durch den Benutzer charakteristisch ist.

Insbesondere die Freischaltung vergleichsweise großer Netzbereiche kann eine Genehmigung erfordern. Hierzu kann vorgesehen sein, dass die Schaltempfehlungsinformation an wenigstens einen Benutzer übermittelt bzw. bei diesem bereitgestellt wird. Das Übermitteln kann insbesondere durch ein Übermitteln an ein Benutzergerät erfolgen. Das Bereitstellen kann insbesondere durch ein Bereitstellen über ein Web-Interface erfolgen, über das die Schaltempfehlungsinformation durch einen Benutzer abrufbar ist. Der Benutzer kann wenigstens eine Schaltempfehlung freigeben, was durch die Bereitstellung einer Freigabeinformation in der Schaltempfehlungsinformation gekennzeichnet werden kann. So kann in der Folge vorzugsweise dafür gesorgt werden, dass ausschließlich freigegebene bzw. genehmigte Schaltempfehlungen umgesetzt werden.

Im Rahmen der Erfindung ist es optional möglich, dass ferner Folgendes umfasst ist:
- Archivieren wenigstens einer, insbesondere umgesetzten, Schaltempfehlung, insbesondere durch die zentrale Steuereinheit.

In anderen Worten kann vorgesehen sein, dass wenigstens eine Schaltempfehlung, insbesondere dauerhaft, gespeichert bzw. archiviert wird. Es kann vorgesehen sein, dass ausschließlich umgesetzte, also tatsächlich durchgeführte, Schaltempfehlungen archiviert bzw. gespeichert werden. Hierdurch ergibt sich eine Nachverfolgbarkeit der in dem Stromnetz durchgeführten Schaltvorgänge. Das Speichern bzw. Archivieren wenigstens einer Schaltempfehlung kann vorzugsweise auf einem, insbesondere nichtflüchtigen, Datenspeicher der zentralen Steuereinheit erfolgen.

Die obenstehende Aufgabe wird ferner gelöst durch ein erfindungsgemäßes Energieversorgungssystem, umfassend ein Stromnetz sowie eine zentrale Steuereinheit, das Stromnetz umfassend wenigstens eine Einspeisestelle, wenigstens eine Verbrauchsstelle, wenigstens ein Erfassungsmittel sowie wenigstens eine Schaltanlage, wobei durch das Erfassungsmittel ein Lastzustand an wenigstens einer Einspeisestelle und/oder Verbrauchsstelle erfassbar ist und wobei durch die Schaltanlage eine Energieversorgung wenigstens eines Teilnetzes des Stromnetzes zu- und abschaltbar ist, wobei vorzugsweise das Energieversorgungssystem dazu ausgebildet ist, gemäß einem erfindungsgemäßen Verfahren, insbesondere einem Verfahren nach einem der Ansprüche 1 bis 8 betrieben zu werden. Damit ergeben sich in Bezug auf ein erfindungsgemäßes Energieversorgungssystem die gleichen Vorteile, wie sie bereits in Bezug auf ein erfindungsgemäßes Verfahren beschrieben worden sind.

Eine Verbrauchsstelle soll vorliegend verstanden werden als ein Knoten in dem Stromnetz, an dem elektrische Leistung aus dem Stromnetz entnommen wird. Eine Verbrauchsstelle kann bspw. ein Haushalt oder ein Industriebetrieb sein. Eine Einspeisestelle soll verstanden werden als ein Knoten in dem Stromnetz, an dem elektrische Leistung in das Stromnetz eingespeist wird. Eine Einspeisestelle kann bspw. ein Kraftwerk sein. Auch ein Haushalt mit einer PV-Anlage kann als Einspeisestelle wirken. In Bezug auf ein Niederspannungsnetz kann bspw. auch eine Transformatorenstation als Einspeisestelle wirken, bei der elektrische Leistung aus einem Hochspannungsnetz bereitgestellt und nach einer Spannungstransformation in das Niederspannungsnetz eingespeist wird.

Die zentrale Steuereinheit kann bevorzugt als ein zentraler Server, insbesondere als ein Cloud-Server, ausgebildet sein. Der zentrale Server kann eine Vielzahl von, insbesondere räumlich separierten, Recheneinheiten umfassen.

Die zentrale Steuereinheit und/oder wenigstens eine Erfassungseinheit kann Mittel zur Datenverarbeitung umfassen. Die Mittel zur Datenverarbeitung können insbesondere wenigstens einen Prozessor und/oder wenigstens einen Arbeitsspeicher und/oder wenigstens einen, insbesondere nichtflüchtigen, Arbeitsspeicher umfassen.

Bevorzugt kann durch das Energieversorgungssystem wenigstens ein Benutzergerät umfasst sein. Wenigstens ein Benutzergerät kann vorzugsweise als ein Smartphone, Tablet oder Laptop ausgebildet sein.

Die zentrale Steuereinheit und/oder wenigstens eine Erfassungseinheit und/oder wenigstens ein Benutzergerät und/oder wenigstens eine Schaltanlage kann wenigstens eine Kommunikationsschnittstelle zur, insbesondere drahtgebundenen oder drahtlosen Kommunikation umfassen. Wenigstens eine Kommunikationsschnittstelle kann bspw. als eine Mobilfunkschnittstelle und/oder WLAN-Schnittstelle und/oder PLC-Schnittstelle (Powerline Communication). Eine Mobilfunkschnittstelle und/oder WLAN-Schnittstelle kann besonders bevorzugt für eine Kommunikation zwischen einem Benutzergerät und der zentralen Steuereinheit vorgesehen sein. Eine PLC-Schnittstelle kann besonders bevorzugt für eine Kommunikation zwischen der zentralen Steuereinheit und wenigstens einer Erfassungseinheit vorgesehen sein.

Besonders bevorzugt kann es im Rahmen der Erfindung vorgesehen sein, dass das Stromnetz ein Niederspannungsnetz oder ein Hochspannungsnetz ist. Alternativ ist denkbar, dass das Stromnetz wenigstens ein als Hochspannungsnetz ausgebildetes Teilnetz und wenigstens ein als Niederspannungsnetz ausgebildetes Teilnetz umfasst. Hochspannung soll vorliegend verstanden werden als eine elektrische Spannung größer 1000 V bei Wechselspannung oder größer 1500 V bei Gleichspannung. Niederspannung soll als eine niedrigere Spannung als Hochspannung verstanden werden.

Die obenstehende Aufgabe wird ferner gelöst durch ein erfindungsgemäßes Computerprogrammprodukt, umfassend Befehle, die bewirken, dass ein erfindungsgemäßes Energieversorgungssystem, insbesondere ein Energieversorgungssystem gemäß einem der Ansprüche 9 oder 10, ein erfindungsgemäßes Verfahren, insbesondere ein Verfahren gemäß einem der Ansprüche 1 bis 8, ausführt. Damit ergeben sich in Bezug auf ein erfindungsgemäßes Computerprogrammprodukt die gleichen Vorteile, wie sie bereits in Bezug auf ein erfindungsgemäßes Verfahren und/oder ein erfindungsgemäßes Energieversorgungssystem beschrieben worden sind.

Die obenstehende Aufgabe wird ferner gelöst durch ein erfindungsgemäßes computerlesbares Medium, insbesondere Speichermedium, auf dem ein erfindungsgemäßes Computerprogrammprodukt, insbesondere ein Computerprogrammprodukt nach Anspruch 11, gespeichert ist. Damit ergeben sich in Bezug auf ein erfindungsgemäßes computerlesbares Medium die gleichen Vorteile, wie sie bereits in Bezug auf ein erfindungsgemäßes Verfahren und/oder ein erfindungsgemäßes Energieversorgungssystem und/oder ein erfindungsgemäßes Computerprogrammprodukt beschrieben worden sind.

Die obenstehende Aufgabe wird ferner gelöst durch ein erfindungsgemäßes Datenträgersignal, das ein erfindungsgemäßes Computerprogrammprodukt, insbesondere ein Computerprogrammprodukt nach Anspruch 11, überträgt. Damit ergeben sich in Bezug auf ein Datenträgersignal die gleichen Vorteile, wie sie bereits in Bezug auf ein erfindungsgemäßes Verfahren und/oder ein erfindungsgemäßes Energieversorgungssystem und/oder ein erfindungsgemäßes Computerprogrammprodukt und/oder ein erfindungsgemäßes computerlesbares Medium beschrieben worden sind.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Dabei zeigt
- Fig. 1: eine schematische Ansicht eines Verfahrens und
- Fig. 2: eine schematische Ansicht eines Energieversorgungssystems.

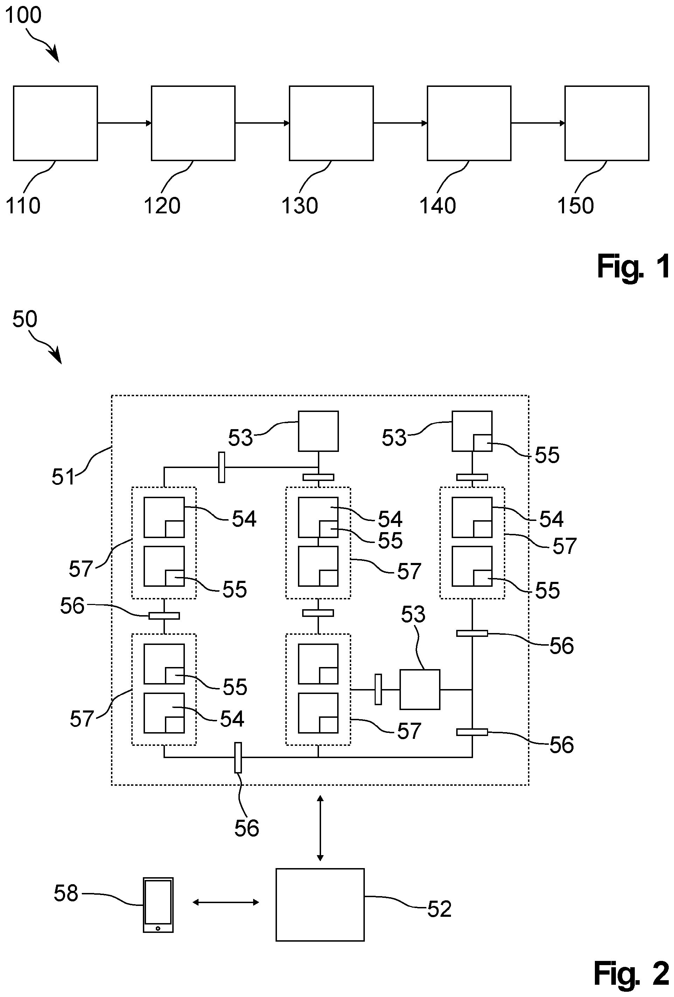

Fig. 1 zeigt eine schematische Ansicht eines Verfahrens 100 zum Betrieb eines Energieversorgungssystems 50, umfassend ein Stromnetz 51, eine zentrale Steuereinheit 52, wenigstens eine Einspeisestelle 53, wenigstens eine Verbrauchsstelle 54, wenigstens ein Erfassungsmittel 55 sowie wenigstens eine Schaltanlage 56, wobei durch das Erfassungsmittel 55 ein Lastzustand an wenigstens einer Einspeisestelle 53 und/oder Verbrauchsstelle 54 erfassbar ist und wobei durch die Schaltanlage 56 eine Energieversorgung wenigstens eines Teilnetzes 57 des Stromnetzes 51 zu- und abschaltbar ist, das Verfahren 100 umfassend:
- Erfassen 110 einer Freischaltanfrage durch die zentrale Steuereinheit 52, wobei die Freischaltanfrage charakteristisch ist für eine geplante Abschaltung der Energieversorgung in wenigstens einem Teilnetz 57 des Stromnetzes 51,
- Bereitstellen 120 wenigstens einer Lastzustandsinformation durch wenigstens ein Erfassungsmittel 55, wobei die Lastzustandsinformation charakteristisch ist für einen Lastzustand an wenigstens einer Einspeisestelle 53 und/oder Verbrauchsstelle 54,
- Übermitteln 130 wenigstens einer Lastzustandsinformation an die zentrale Steuereinheit 52,
- Ermitteln 140 einer Belastungsverteilung innerhalb des Stromnetzes 51 durch die zentrale Steuereinheit 52 in Abhängigkeit wenigstens einer Lastzustandsinformation und
- Ermitteln 150 einer Schaltempfehlungsinformation durch die zentrale Steuereinheit 52 in Abhängigkeit der Freischaltanfrage und der Belastungsverteilung, umfassend wenigstens eine Schaltempfehlung, wobei die Schaltempfehlung charakteristisch ist für wenigstens einen Schaltvorgang in einer Schaltanlage 56.

Fig. 2 zeigt eine schematische Ansicht eines Energieversorgungssystems 50. Das Energieversorgungssystem 50 umfasst ein Stromnetz 51 sowie eine zentrale Steuereinheit 52. Das Stromnetz 51 umfasst ferner wenigstens eine Einspeisestelle 53, wenigstens eine Verbrauchsstelle 54 sowie wenigstens ein Erfassungsmittel 55. Vorliegend sind allen Einspeisestellen 53 und Verbrauchsstellen 54 Erfassungsmittel 55 zugeordnet. Durch die Erfassungsmittel 55 ist ein Lastzustand an den jeweiligen Verbrauchsstellen 54 und Einspeisestellen 53 erfassbar. Ferner umfasst das Stromnetz 51 eine Mehrzahl von Schaltanlagen 56, wobei durch die Schaltanlagen 56 eine Energieversorgung in den unterschiedlichen Teilnetzen 57 zu- und abschaltbar ist.

Seitens der Erfassungsmittel 55 werden Lastzustandsinformationen ermittelt bzw. bereitgestellt und an die zentrale Steuereinheit 52 übermittelt. Durch die zentrale Steuereinheit 52 kann auf dieser Grundlage eine Belastungsverteilung in dem Stromnetz 51 ermittelt werden. In Abhängigkeit dieser Belastungsverteilung sowie einer vorgegebenen Freischaltanfrage wird seitens der zentralen Steuereinheit 52 eine Schaltempfehlungsinformation ermittelt, welche wenigstens eine Schaltempfehlung zur Erreichung des durch die Freischaltanfrage vorgegebenen Stromnetzzustands umfasst. Jede Schaltempfehlung kann einen Schaltvorgang oder eine Mehrzahl von Schaltvorgängen in den Schaltanlagen 56 umfassen.

Das Energieversorgungssystem 50 umfasst ferner wenigstens ein Benutzergerät 58, welches vorliegend als ein Smartphone oder Tablet ausgebildet ist. Das Benutzergerät 58 ist dazu ausgebildet, zumindest temporär, in eine bidirektionale Kommunikationsverbindung mit der zentralen Steuereinheit 52 bringbar zu sein. So kann der zentralen Steuereinheit 52 bspw. durch einen Benutzer eine Freischaltanfrage bereitgestellt werden und/oder Schaltempfehlungsinformation von der zentralen Steuereinheit 52 an einen Benutzer übermittelt werden und/oder eine ferngesteuerte Schaltung wenigstens einer Schaltanlage 56 durch einen Benutzer ausgelöst werden.

### Bezugszeichenliste

- 50: Energieversorgungssystem
- 51: Stromnetz
- 52: zentrale Steuereinheit
- 53: Einspeisestelle
- 54: Verbrauchsstelle
- 55: Erfassungsmittel
- 56: Schaltanlage
- 57: Teilnetz
- 58: Benutzergerät

- 100: Verfahren
- 110: Erfassen
- 120: Bereitstellen
- 130: Übermitteln
- 140: Ermitteln
- 150: Ermitteln

## Patentansprüche

1. Verfahren (100) zum Betrieb eines Energieversorgungssystems (50), umfassend ein Stromnetz (51) sowie eine zentrale Steuereinheit (52), das Stromnetz (51) umfassend wenigstens eine Einspeisestelle (53), wenigstens eine Verbrauchsstelle (54), wenigstens ein Erfassungsmittel (55) sowie wenigstens eine Schaltanlage (56), wobei durch das Erfassungsmittel (55) ein Lastzustand an wenigstens einer Einspeisestelle (53) und/oder Verbrauchsstelle (54) erfassbar ist und wobei durch die Schaltanlage (56) eine Energieversorgung wenigstens eines Teilnetzes (57) des Stromnetzes (51) zu- und abschaltbar ist, das Verfahren (100) umfassend:
- Erfassen (110) einer Freischaltanfrage durch die zentrale Steuereinheit (52), wobei die Freischaltanfrage charakteristisch ist für eine geplante Abschaltung der Energieversorgung in wenigstens einem Teilnetz (57) des Stromnetzes (51),
- Bereitstellen (120) wenigstens einer Lastzustandsinformation durch wenigstens ein Erfassungsmittel (55), wobei die Lastzustandsinformation charakteristisch ist für einen Lastzustand an wenigstens einer Einspeisestelle (53) und/oder Verbrauchsstelle (54),
- Übermitteln (130) wenigstens einer Lastzustandsinformation an die zentrale Steuereinheit (52),
- Ermitteln (140) einer Belastungsverteilung innerhalb des Stromnetzes (51) durch die zentrale Steuereinheit (52) in Abhängigkeit wenigstens einer Lastzustandsinformation und
- Ermitteln (150) einer Schaltempfehlungsinformation durch die zentrale Steuereinheit (52) in Abhängigkeit der Freischaltanfrage und der Belastungsverteilung, umfassend wenigstens eine Schaltempfehlung, wobei die Schaltempfehlung charakteristisch ist für wenigstens einen Schaltvorgang in einer Schaltanlage (56) und optional
- Anpassen des Betriebs des Energieversorgungssystems in Abhängigkeit der Schaltempfehlungsinformation.

2. Verfahren (100) nach Anspruch 1,
**dadurch gekennzeichnet,**
**dass** das Ermitteln (140) einer Belastungsverteilung innerhalb des Stromnetzes (51) auf Grundlage eines Stromnetzmodells, insbesondere eines digitalen Zwillings, des Stromnetzes (51) erfolgt.

3. Verfahren (100) nach einem der vorhergehenden Ansprüche,
**dadurch gekennzeichnet,**
**dass** das das Übermitteln (130) wenigstens einer Lastzustandsinformation zwischen dem wenigstens einen Erfassungsmittel (55) und der zentralen Steuereinheit (52) gemäß einem Push-Verfahren und/oder einem Pull-Verfahren erfolgt.

4. Verfahren (100) nach einem der vorhergehenden Ansprüche,
**dadurch gekennzeichnet,**
**dass** ferner wenigstens eines der folgenden umfasst ist:
- Bereitstellen einer Schaltempfehlungsinformation für einen Benutzer, insbesondere durch die zentrale Steuereinheit (52), und/oder
- Auswählen einer Schaltempfehlung aus der Schaltempfehlungsinformation und/oder
- Umsetzen der Schaltempfehlung.

5. Verfahren (100) nach einem der vorhergehenden Ansprüche,
**dadurch gekennzeichnet,**
**dass** das Ermitteln (150) wenigstens einer Schaltempfehlung Folgendes umfasst:
- Berücksichtigen wenigstens einer aus wenigstens einem Schaltvorgang in einer Schaltanlage (56) resultierenden Laständerung in dem Stromnetz (51), sodass eine Überlastung des Stromnetzes (51) bei einem Umsetzen der Schaltempfehlung vermieden wird.

6. Verfahren (100) nach einem der vorhergehenden Ansprüche,
**dadurch gekennzeichnet,**
**dass** das Ermitteln (150) wenigstens einer Schaltempfehlung Folgendes umfasst:
- Berücksichtigen der Position wenigstens zweier Schaltanlagen (56), sodass eine Wegstrecke zwischen den durch die Schaltempfehlung adressierten Schaltanlagen (56) minimal ist.

7. Verfahren (100) nach einem der vorhergehenden Ansprüche,
**dadurch gekennzeichnet,**
**dass** das Ermitteln (150) wenigstens einer Schaltempfehlung Folgendes umfasst:
- Berücksichtigen der Fernsteuerbarkeit wenigstens einer Schaltanlage (56), sodass eine Umsetzung der Schaltempfehlung ferngesteuert durchführbar ist.

8. Verfahren (100) nach einem der vorhergehenden Ansprüche,
**dadurch gekennzeichnet,**
**dass** das Ermitteln (150) wenigstens einer Schaltempfehlung Folgendes umfasst:
- Berücksichtigen einer Lastvorhersage zur zeitlichen Entwicklung des Lastzustands an wenigstens einer Einspeisestelle (53) und/oder Verbrauchsstelle (54) zur Vermeidung einer zukünftigen Überlastung des Stromnetzes (51) bei einem Umsetzen der Schaltempfehlung.

9. Verfahren (100) nach einem der vorhergehenden Ansprüche,
**dadurch gekennzeichnet,**
**dass** ferner wenigstens eines der folgenden umfasst ist:
- Übermitteln der Schaltempfehlungsinformation an einen Benutzer, insbesondere durch die zentrale Steuereinheit (52),
- Freigeben wenigstens einer durch die Schaltempfehlungsinformation umfassten Schaltempfehlung durch den Benutzer und
- Bereitstellen einer Freigabeinformation in der Schaltempfehlungsinformation, insbesondere durch die zentrale Steuereinheit (52), wobei die Freigabeinformation für die Freigabe durch den Benutzer charakteristisch ist.

10. Verfahren (100) nach einem der vorhergehenden Ansprüche,
**dadurch gekennzeichnet,**
**dass** ferner Folgendes umfasst ist:
- Archivieren wenigstens einer, insbesondere umgesetzten, Schaltempfehlung, insbesondere durch die zentrale Steuereinheit (52).

11. Energieversorgungssystem (50), umfassend ein Stromnetz (51) sowie eine zentrale Steuereinheit (52), das Stromnetz (51) umfassend wenigstens eine Einspeisestelle (53), wenigstens eine Verbrauchsstelle (54), wenigstens ein Erfassungsmittel (55) sowie wenigstens eine Schaltanlage (56), wobei durch das Erfassungsmittel (55) ein Lastzustand an wenigstens einer Einspeisestelle (53) und/oder Verbrauchsstelle (54) erfassbar ist und wobei durch die Schaltanlage (56) eine Energieversorgung wenigstens eines Teilnetzes (57) des Stromnetzes (51) zu- und abschaltbar ist, wobei das Energieversorgungssystem (50) dazu ausgebildet ist, gemäß einem Verfahren (100) nach einem der vorhergehenden Ansprüche betrieben zu werden.

12. Energieversorgungssystem (50) nach Anspruch 11,
**dadurch gekennzeichnet,**
**dass** das Stromnetz (51) ein Niederspannungsnetz ist.

13. Computerprogrammprodukt, umfassend Befehle, die bewirken, dass ein Energieversorgungssystem (50) gemäß einem der Ansprüche 11 oder 12 ein Verfahren (100) gemäß einem der Ansprüche 1 bis 10 ausführt.

14. Computerlesbares Medium, auf dem ein Computerprogrammprodukt nach dem vorhergehenden Anspruch gespeichert ist.

15. Datenträgersignal, das ein Computerprogrammprodukt nach Anspruch 13 überträgt.
